# DEMANDE DE BREVET EUROPEEN

(11) **EP 4 817 386 A1**
(43) Date de publication de la demande: **07.10.2026**
(21) Numéro de dépôt: 26170361.5
(22) Date de dépôt: 02.04.2026
(51) Int. Cl.: A01C 7/04

(54) **ENSEMBLE DE DISTRIBUTION POUR UN SEMOIR COMPORTANT UN DISPOSITIF DE REGLAGE D'UN JEU ET SEMOIR ASSOCIE**

(30) Priorité: 02.04.2025 FR 2503454
(71) Demandeur: Kuhn SAS, 67700 Saverne (FR)
(72) Inventeur: CONSTANT, Olivier, 67340 WEITERSWILLER (FR); MATHIS, Louis, 67100 STRASBOURG (FR)

(57) **Abrégé**

Ensemble de distribution pour un semoir comportant un dispositif de réglage d'un jeu et semoir associé

L'invention concerne un ensemble de distribution comprenant un boîtier (1) comprenant une partie fixe (2) et une porte (3), un disque (7) disposé à l'intérieur du boîtier (1) séparant l'intérieur du boîtier (1) en une première chambre (10) et une deuxième chambre (11) comportant une cloison intermédiaire (12), un dispositif de réglage (15) d'un jeu entre la deuxième surface (9) du disque (7) et la partie fixe (2), caractérisé en ce que :
- le dispositif de réglage (15) est configuré pour permettre le déplacement selon une direction de translation axiale parallèle à l'axe d'entraînement (4), du sous-ensemble cloison intermédiaire (12)-disque (7) relativement à la partie fixe (2) et pour contraindre la position du sous-ensemble par rapport à la partie fixe (2),
- le dispositif de réglage (15) comprend un organe de réglage (17) du jeu saillant de la face extérieure (3a) de la porte (3).

## Description

L'invention concerne le domaine des ensembles de distribution pour un semoir comportant un dispositif de réglage d'un jeu et le domaine des semoirs.

Dans un semoir monograine, un ensemble de distribution comprend généralement un boitier étanche en deux parties, une partie fixe et une porte, qui comporte un disque perforé entrainé en rotation par un moteur. Le disque sépare le boitier en deux zones dans lesquelles les pressions d'air sont différentes, une différence de pression, qui peut être positive ou négative, est donc créée de part et d'autre du disque. Le boitier est relié à une soufflerie qui gère la différence de pression selon le type de graine, la vitesse d'avance, etc. En bas du disque, c'est-à-dire au fond du boitier, se trouve une réserve de graines, approvisionnée par une trémie. Ces graines sont en contact avec le disque en rotation, qui, au fur et à mesure de sa rotation, va entrainer les graines une par une dans ses perforations.

Le diamètre et la forme des perforations du disque sont fait de manière à pouvoir accueillir une graine, le maintien de la graine dans le trou se fait grâce à la différence de pression entre les deux côtés du disque. Les trous sont souvent bordés de formes spéciales, en relief et/ou en creux, aménagées dans le disque qui permettent de guider et/ou d'orienter les graines vers la perforation. Ces zones autour des trous sont appelées agitateurs.

Une fois les graines dans les trous du disque, un système dit de sélection permet d'éliminer les graines qui sont en trop pour éviter les doubles car il peut arriver que plusieurs graines viennent se loger dans un seul trou. La sélection peut se faire grâce à des dents, des brosses, etc. fixes situées à l'extérieur et/ou à l'intérieur du parcours des graines Les graines excédentaires retombent dans la réserve.

Une fois les graines sélectionnées, elles sont transportées vers la dernière zone de la distribution qui est généralement située dans le dernier quart de tour du disque, où la différence de pression n'est plus présente. Ceci fait que la graine sort du trou et sort de la distribution vers le sol. L'éjection de la graine peut être assistée par une roulette qui permet de couper la différence de pression et éventuellement de pousser la graine en dehors du trou à l'aide de picots.

Il existe par ailleurs un jeu entre le disque et la partie fixe du boitier.

Il doit de préférence être possible d'ajuster le jeu entre le disque et la partie fixe du boitier. En effet, ce jeu doit être bien réglé pour éviter le contact entre le disque et la partie fixe du boitier, tout en évitant de créer un écart qui laisserait passer des graines. Un jeu mal réglé augmente le besoin en puissance d'entrainement dû aux frottements inutiles.

Le document EP3726954B1 divulgue déjà que la distance du disque perforé par rapport à la partie stationnaire du boîtier peut être réglée. Toutefois, dans la solution proposée le réglage du jeu ne peut être effectuée que si la porte est ouverte par le réglage d'une tige filetée avec un pas de vis sur le disque et l'arbre d'entraînement. Par conséquent, la manipulation n'est pas simple ce qui ne permet pas un réglage optimal du jeu.

La présente invention a pour but de pallier au moins l'un de ces inconvénients et vise à proposer une solution alternative pour régler le jeu qui permet un réglage optimal du jeu avec une manipulation simple.

A cet effet, l'invention concerne un ensemble de distribution pour un semoir comprenant au moins :
- un boîtier étanche comprenant au moins une partie fixe et une porte mobile entre une position d'ouverture et une position de fermeture,
- un axe d'entrainement d'un moteur débouchant sur la partie fixe,
- un organe de distribution d'une pluralité d'éléments granulaires agencé pour distribuer de façon discrète et singulière une pluralité d'éléments granulaires sous la forme d'un disque perforé comportant une première surface orientée en regard de l'intérieur de la porte dans la position de fermeture et une deuxième surface en regard de la partie fixe dans la position de fermeture, au moins dans la position de fermeture le disque étant monté autour de l'axe d'entrainement du moteur pour être entraîné en rotation et étant disposé à l'intérieur du boîtier pour séparer l'intérieur du boîtier en une première chambre et une deuxième chambre, lesquelles sont distinctes, la première chambre étant configurée pour recevoir tout ou partie de la pluralité d'éléments granulaires et la deuxième chambre étant fermée par la porte,
- la deuxième chambre comporte une cloison intermédiaire en forme de cloche comportant une surface d'appui circulaire venant en appui sur un bord périphérique de la première surface du disque,
- un dispositif de réglage d'un jeu correspondant à l'écartement entre la deuxième surface du disque et la partie fixe du boîtier dans la position de fermeture,
   ensemble de distribution caractérisé en ce que :
   - le dispositif de réglage du jeu est configuré pour permettre le déplacement en translation, selon une direction de translation axiale parallèle à l'axe d'entraînement, du sous-ensemble cloison intermédiaire-disque relativement à la partie fixe du boîtier et pour contraindre la position du sous-ensemble cloison intermédiaire-disque par rapport à la partie fixe,
   - le dispositif de réglage comprend un organe de réglage du jeu saillant de la face extérieure de la porte, et configuré pour régler le jeu.

L'invention concerne également un semoir comprenant un ensemble de distribution caractérisé en ce que l'ensemble de distribution est conforme à l'invention.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective de l'ensemble de distribution selon l'invention,
[Fig. 2] la figure 2 représente une vue de face de l'ensemble de distribution selon l'invention de la figure 1,
[Fig. 3] la figure 3 représente une vue en coupe de l'ensemble de distribution selon l'invention de la figure 1,
[Fig. 4] la figure 4 représente une vue d'un détail de la figure 3 montrant l'emplacement du jeu,
[Fig. 5] la figure 5 représente une vue en perspective de la porte montrant l'organe de réglage du dispositif de réglage de l'ensemble de distribution selon l'invention,
[Fig. 6] la figure 6 représente une vue d'un détail de la figure 3 montrant l'organe de réglage de l'ensemble de distribution selon l'invention,
[Fig. 7] la figure 7 représente une vue en coupe de la porte et du sous-ensemble cloison intermédiaire-disque de l'ensemble de distribution selon l'invention,
[Fig. 8] la figure 8 représente une vue en perspective de dessous de la porte et du sous-ensemble cloison intermédiaire-disque de l'ensemble de distribution selon l'invention,
[Fig. 9] la figure 9 représente une vue en perspective du dispositif de réglage et du sous-ensemble cloison intermédiaire-disque de l'ensemble de distribution selon l'invention,
[Fig. 10] la figure 10 représente une vue en coupe du dispositif de réglage et du disque de l'ensemble de distribution selon l'invention,
[Fig. 11] la figure 11 représente une vue en perspective du dispositif de réglage, du disque et du dispositif d'éjection de l'ensemble de distribution selon l'invention, et
[Fig. 12] la figure 12 représente une vue en perspective du dispositif de réglage et du dispositif d'éjection de l'ensemble de distribution selon l'invention.

Un ensemble de distribution pour un semoir comprend au moins :
- un boîtier 1 étanche comprenant au moins une partie fixe 2 et une porte 3 mobile entre une position d'ouverture et une position de fermeture POFF,
- un axe d'entrainement 4 d'un moteur 5 débouchant sur la partie fixe 2,
- un organe de distribution 6 d'une pluralité d'éléments granulaires agencé pour distribuer de façon discrète et singulière une pluralité d'éléments granulaires sous la forme d'un disque 7 perforé comportant une première surface 8 orientée en regard de l'intérieur de la porte 3 dans la position de fermeture POFF et une deuxième surface 9 en regard de la partie fixe 2 dans la position de fermeture POFF, au moins dans la position de fermeture POFF le disque 7 étant monté autour de l'axe d'entrainement 4 du moteur 5 pour être entraîné en rotation et étant disposé à l'intérieur du boîtier 1 pour séparer l'intérieur du boîtier 1 en une première chambre 10 et une deuxième chambre 11, lesquelles sont distinctes, la première chambre 10 étant configurée pour recevoir tout ou partie de la pluralité d'éléments granulaires et la deuxième chambre 11 étant fermée par la porte 3,
- la deuxième chambre 11 comporte une cloison intermédiaire 12 en forme de cloche comportant une surface d'appui circulaire 13 venant en appui sur un bord périphérique 14 de la première surface 8 du disque 7,
- un dispositif de réglage 15 d'un jeu J correspondant à l'écartement entre la deuxième surface 9 du disque 7 et la partie fixe 2 du boîtier 1 dans la position de fermeture POFF.

Conformément à l'invention, l'ensemble de distribution est caractérisé en ce que :
- le dispositif de réglage 15 du jeu J est configuré pour permettre le déplacement en translation, selon une direction de translation axiale parallèle à l'axe d'entraînement 4, du sous-ensemble cloison intermédiaire 12-disque 7 relativement à la partie fixe 2 du boîtier 1 et pour contraindre la position du sous-ensemble cloison intermédiaire 12-disque 7 par rapport à la partie fixe 2,
- le dispositif de réglage 15 comprend un organe de réglage 17 du jeu J saillant de la face extérieure 3a de la porte 3, et configuré pour régler le jeu J.

Avantageusement, cette solution présente l'avantage de permettre de régler le jeu J depuis l'extérieur de la porte 3 même lorsque la porte 3 est dans la position de fermeture POFF. Le jeu J est réglé par le décalage de la cloison intermédiaire 12 en forme de cloche et du disque 7 par rapport à la partie fixe 2 du boitier 1 et en contraignant le sous-ensemble cloison intermédiaire 12 en forme de cloche et le disque 7 dans la position souhaitée et de sorte à figer le réglage du jeu J. Il en résulte une manipulation simple qui permet un réglage optimal du jeu J et un besoin en puissance d'entrainement réduit du fait de l'absence de frottement.

De préférence, le dispositif de réglage 15 comprend un organe ressort 18 situé à l'intérieur de la deuxième chambre 11 entre la face intérieure 3b de la porte 3 et la surface externe supérieure 16 de la cloison intermédiaire 12.

Avantageusement, l'organe ressort 18 permet de contraindre le sous-ensemble cloison intermédiaire 12 en forme de cloche et le disque 7 dans la position souhaitée. Il en résulte un réglage du jeu J stable.

De préférence, la porte 3 comprend un passage central 19 et le dispositif de réglage 15 comprend un manchon 20 traversant le passage central 19 monté coulissant selon la direction de translation axiale dans le passage central 19 et comportant une portion interne 21 située dans la deuxième chambre 11 comprenant un roulement 22 autour duquel la cloison intermédiaire 12 est montée solidaire et en ce que la face intérieure 3b de la porte 3 vient en appui contre l'organe ressort 18 et l'organe ressort 18 vient en appui contre le roulement 22 de sorte à exercer une force d'appui pour contraindre le sous-ensemble cloison intermédiaire 12-disque 7.

Avantageusement, cette configuration permet de décaler le sous-ensemble cloison intermédiaire 12-disque 7 par rapport à la porte 3 et à la partie fixe 2 pour régler le jeu J. Par ailleurs, le dispositif de réglage 15 est prévu autour du passage central 19 qui est configuré pour la mise à la pression atmosphérique. L'ensemble cloison intermédiaire 12-disque 7 est monté rotatif par rapport au manchon 20 via le roulement 22 ce qui permet que le disque 7 et la cloison intermédiaire 12 soient entraînés ensemble par le moteur 5. La force d'appui est appliquée sur le roulement 22 ce qui permet d'éviter l'usure de l'organe ressort 18.

De préférence, le manchon 20 comprend une extrémité externe saillante 23 de la face extérieure 3a de la porte 3, l'extrémité externe saillante 23 comprenant une paroi externe 24 avec un filetage 25, et l'organe de réglage 17 comprend un écrou de réglage 26 associé au filetage 25.

Cette disposition permet de régler le jeu J depuis l'extérieur de la porte 3 par une simple manipulation de serrage ou de desserrage de l'écrou de réglage 26.

Préférentiellement, l'organe ressort 18 comprend au moins une rondelle ressort 27 disposée autour de la portion interne 21 du manchon 20 et en appui sur le roulement 22.

Cet exemple n'est pas limitatif et la rondelle ressort 27 peut être remplacée par un autre type de ressort qui remplit la même fonction.

De préférence, le manchon 20 comprend une extrémité interne 28 située dans l'espace 29 entre la cloison intermédiaire 12 et le disque 7 et l'ensemble de distribution comprend un dispositif d'éjection 30 fixé sur, ou à proximité de l'extrémité interne 28.

Cette disposition permet d'utiliser la présence du manchon 20 pour positionner le dispositif d'éjection 30 dans la deuxième chambre 11. Le dispositif d'éjection 30 permet de couper la différence de pression et éventuellement de pousser un élément granulaire, tel qu'une graine, situé dans une perforation 35 du disque 7 en dehors de cette dernière.

De préférence, l'ensemble de distribution comprend un capot 31 recouvrant l'organe de réglage 17 et le capot 31 est fixé par au moins un organe de fixation 32 à la porte 3.

Le capot 31 situé au-dessus de l'organe de réglage 17 sert également à verrouiller la position de celui-ci pour éviter un déréglage par exemple pendant le fonctionnement.

Préférentiellement, la face extérieure 3a de la porte 3 comprend un indicateur visuel 33 représentatif du réglage du jeu J disposé autour de l'organe de réglage 17.

Cette disposition permet de faciliter et de repérer le réglage du jeu J en fournissant une indication visuelle à l'utilisateur. Par exemple, il est possible de repérer le réglage d'usine en cas de démontage pour une opération de maintenance ou de réparation.

De préférence, la cloison intermédiaire 12 et le disque 7 sont solidarisés par des organes d'assemblage 34.

Ainsi, le disque 7 est maintenu et verrouillé en position sur la cloison intermédiaire 12.

D'autres avantages ressortent de la présente invention comme énoncés ci-après. Le réglage du jeu J se fait de préférence en usine, afin que l'ensemble de distribution soit bien réglé pour l'utilisateur final. Lors du montage de la distribution, l'opérateur met le disque 7 en contact avec la partie fixe 2 du boitier 1 ce qui correspond à un réglage extrême puis resserre l'organe de réglage 17 d'un certain nombre de tours pour obtenir une certaine distance de jeu J.

Sauf cas extrême, par exemple l'usure du boitier 1, l'utilisateur final n'a plus besoin de régler ce jeu J. Si l'utilisateur change de disque 7 pour un remplacement ou pour semer d'autre type de graines, le jeu J n'a pas besoin d'être réajusté car tous les disques 7 ont la même épaisseur.

Le boîtier 1 comprend la partie fixe 2 et la porte 3 qui est mobile par rapport à la partie fixe 2 et permet d'ouvrir le boîtier 1 pour donner accès à l'intérieur du boîtier 1 ou de le fermer.

La porte 3 adopte ainsi soit une position d'ouverture soit une position de fermeture POFF. Dans la position d'ouverture, la porte 3 peut être le cas échéant totalement retirée de la partie fixe 2 ou y être raccordée tout en donnant accès à l'intérieur du boîtier 1. La porte 3 est de préférence de forme cylindrique. La porte 3 comprend le passage central 19 qui permet l'échange d'air entre l'extérieur et l'intérieur du boîtier 1. Cet échange d'air est guidé par le capot 31.

L'organe de distribution 6 comprend le disque 7 de distribution perforé entrainé en rotation par le moteur 5 autour de l'axe d'entraînement 4. Le disque 7 de distribution sépare le boîtier 1 en deux chambres, la première chambre 10 et la deuxième chambre 11, dans lesquelles les pressions d'air sont de préférence différentes. La première chambre 10 et la deuxième chambre 11 ont préférentiellement une forme sensiblement cylindrique. La porte 3 reçoit le disque 7 de distribution. Le disque 7 de distribution comprend de préférence une pluralité de perforations 35.

La cloison intermédiaire 12 et le disque 7 sont de préférence solidarisés. La cloison intermédiaire 12 est également entraînée en rotation autour de l'axe d'entraînement 4 via la mise en mouvement du disque 7.

Le dispositif de réglage 15 a pour fonction de permettre le décalage en translation de la cloison intermédiaire 12 en forme de cloche et du disque 7 par rapport à la partie fixe 2 du boitier 1 et de contraindre le sous-ensemble cloison intermédiaire 12 en forme de cloche et le disque 7 dans la position souhaitée, de sorte à régler puis à figer le réglage du jeu J.

Le dispositif de réglage 15 permet en outre de régler le jeu J depuis l'extérieur de la porte 3 via l'organe de réglage 17.

Dans l'exemple illustré, le dispositif de réglage 15 comprend l'organe de réglage 17, le manchon 20 et l'organe ressort 18.

L'organe de réglage 17 du jeu J est saillant de la face extérieure 3a de la porte 3. Il est ainsi accessible par l'extérieur du boîtier 1. De préférence, l'organe de réglage 17 comprend l'écrou de réglage 26.

L'organe ressort 18 a pour fonction de contraindre la position du sous-ensemble cloison intermédiaire 12 - disque 7 pour verrouiller le réglage du jeu J.

L'organe de ressort 18 est de préférence une rondelle ressort 27 ou équivalent.

Le manchon 20 est de préférence de forme globalement cylindrique.

Le manchon 20 comprend de préférence la portion interne 21 entourée par l'extrémité externe saillante 23 et l'extrémité interne 28 qui est à l'opposé de l'extrémité externe saillante 23.

La cloison intermédiaire 12 est de préférence traversée par le manchon 20 au niveau d'un orifice 12a aligné avec le passage central 19.

Le roulement 22 est monté de manière solidaire dans l'orifice de la cloison intermédiaire 12 et sur la portion interne 21 du manchon 20

Le roulement 22 permet de solidariser la cloison intermédiaire 12 au manchon 20 au niveau de la portion interne 21 tout en permettant sa rotation autour de l'axe d'entraînement 4.

L'extrémité externe saillante 23 est saillante de la face extérieure 3a de la porte 3. Sa paroi externe 24 présente le filetage 25 sur lequel est vissé l'écrou de réglage 26 qui peut être serré ou desserré suivant le sens de rotation appliqué. Le nombre de tours appliqués à l'écrou de réglage 26 permet l'ajustement du jeu J.

Dans l'espace 29 se situent de préférence l'extrémité interne 28 du manchon 20 et le dispositif d'éjection 30.

L'extrémité interne 28 du manchon 20 peut présenter une forme évasée de préférence conique.

L'extrémité interne 28 du manchon 20 est de préférence en regard de la surface supérieure 8 du disque 7.

Le dispositif d'éjection 30 a pour fonction de couper la différence de pression et éventuellement de pousser un élément granulaire, tel qu'une graine, situé dans une perforation 35 du disque 7 en dehors de cette dernière.

Le dispositif d'éjection 30 comprend de préférence une roue de séparation 36 comportant un axe de rotation 37.

La roue de séparation 36 comporte une pluralité de saillies radiales 39 saillantes de la surface périphérique 38, chacune des saillies radiales 39 étant configurée pour s'insérer dans une des perforations 35 dans une position d'insertion.

De préférence, les saillies radiales 9 sont configurées pour s'insérer par l'entrée 40 de l'une des perforations 35 de manière étanche à l'intérieur de celle-ci 3 par conjugaison de forme et/ou au moyen d'un élément d'étanchéité dans la position d'insertion de sorte à réaliser l'étanchéité à l'intérieur de la perforation 35.

La roue de séparation 36 est de préférence montée en rotation autour de l'axe de rotation 37 sur un support 41 qui est fixé à l'extrémité interne 28.

Chaque saillie radiale 39 en forme de cylindre circulaire de profil courbe ou de cône tronqué présente un sommet 42 de préférence plan ou bombé duquel un pion de centrage 43 est saillant, le pion de centrage 43 est configuré pour déboucher vers la sortie de la perforation 35 dans la position d'insertion.

Le capot 31 permet de recouvrir l'organe de réglage 17, mais de préférence également le passage central 19. Le capot 31 est de préférence démontable de la porte 3 par retrait des organes de fixation 32. Les organes de fixation 32 peuvent comprendre des vis ou similaire.

L'indicateur visuel 33 peut comprendre une graduation avec un ensemble de traits 44 et la valeur d'une mesure 45, indiquant le pas du réglage du jeu J entre deux traits 44 adjacents. Dans l'exemple illustré, la valeur de la mesure 45 vaut 0.1 millimètre. Les traits 44 sont de préférence répartis à distance régulière circulairement autour de l'écrou de réglage 26 sur la face extérieure 3a de la porte 3. L'indicateur visuel 33 est visible de l'extérieur de la porte 3 au moins lorsque le capot 31 n'est pas monté. Dans une variante non-représentée, l'indicateur visuel 33 peut également comprendre une mesure qui représente une valeur de réglage de jeu recommandée par le constructeur, ou encore une valeur de réglage de jeu correspondant au réglage réalisé par le constructeur au moment de l'assemblage de l'ensemble de distribution en usine.

Les organes d'assemblage 34 permettent de solidariser le disque 7 à la cloison intermédiaire 12 de manière démontable. La liaison est réalisée pour une rotation, par exemple d'un huitième de tour. La cloison intermédiaire 12 comprend plusieurs excroissances sur lesquelles viennent se placer des évidements prévus sur la périphérie extérieure du disque 7. Ces excroissances présentent un profil en pente, la rotation du disque 7 sur la cloison intermédiaire 12 permet le serrage de la liaison et ainsi la solidarisation du disque 7 sur la cloison intermédiaire 12.

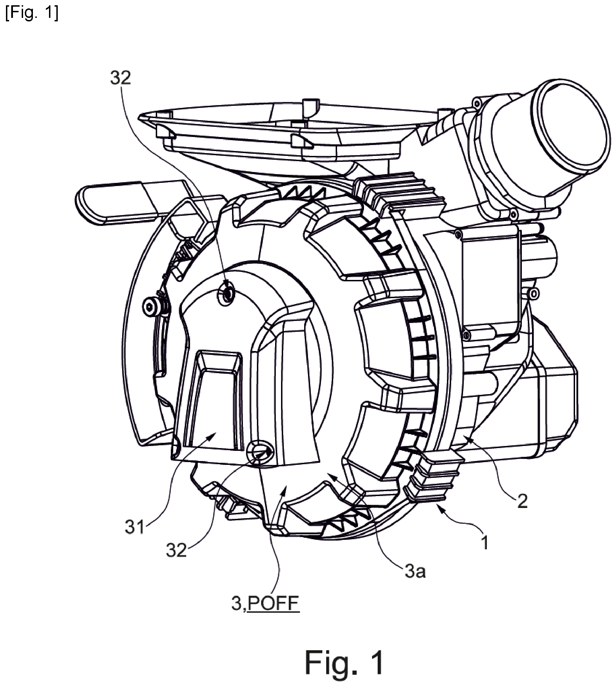

Les figures 1 à 3 illustrent l'ensemble de distribution selon l'invention.

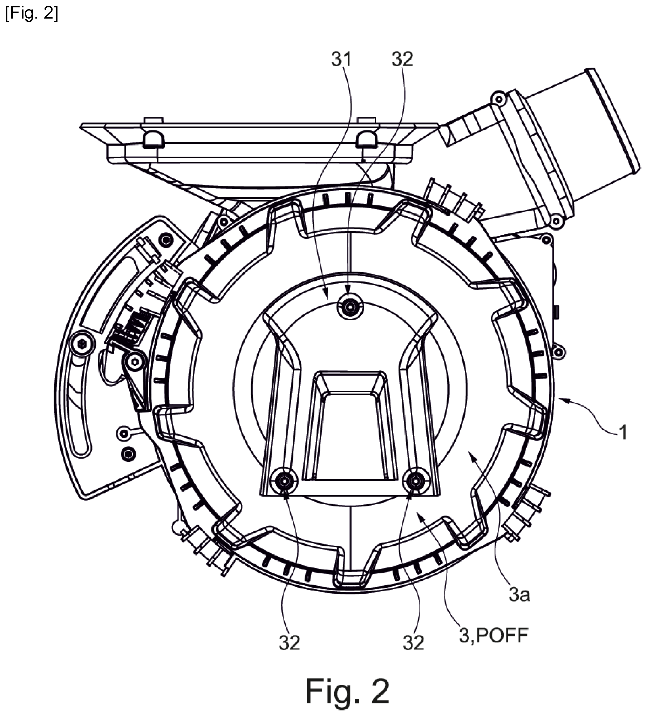

Les figures 1 et 2 montrent le boîtier 1 étanche avec la porte 3 qui recouvre et ferme de manière étanche la partie fixe 2 dans la position de fermeture POFF. La porte 3 est munie du capot 31 qui est monté par les organes de fixation 32 sur la face extérieure 3a de la porte 3.

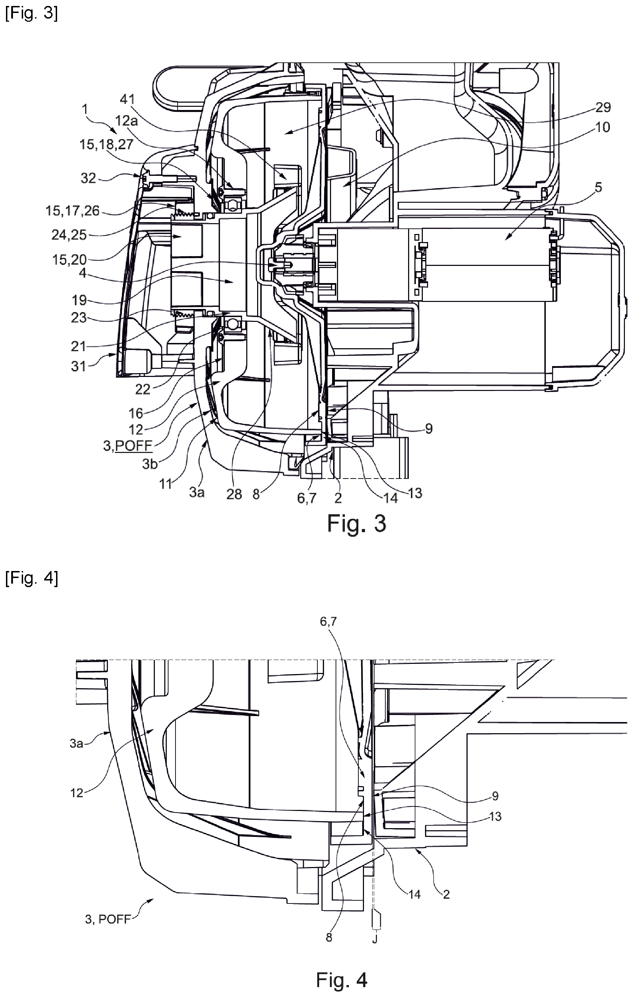

La figure 3 illustre en outre que l'ensemble de distribution comprend le moteur 5 avec son axe d'entraînement 4 débouchant sur la partie fixe 2. Le disque 7 est disposé à l'intérieur du boîtier 1 et est monté autour de l'axe d'entrainement 4. Le disque 7 sépare l'intérieur du boîtier 1 en deux compartiments avec la première chambre 10 du côté de la partie fixe 2 et la deuxième chambre 11 du côté de la porte 3. Dans la deuxième chambre 11 se trouve en outre la cloison intermédiaire 12 en forme de cloche avec sa surface d'appui circulaire 13 venant en appui sur le bord périphérique 14 de la première surface 8 du disque 7 et qui est solidaire du disque 7. Le dispositif de réglage 15 du jeu J comprend l'organe de réglage 17, le manchon 20 et l'organe ressort 18. L'organe de réglage 17 est sous la forme de l'écrou de réglage 26 qui est vissé sur le filetage 25 de la paroi externe 24 de l'extrémité externe saillante 23 du manchon 20 et qui est saillant de la face extérieure 3a de la porte 3. Le manchon 20 traverse le passage central 19 et est monté coulissant selon la direction de translation axiale dans ce dernier. Le manchon 20 traverse la cloison intermédiaire 12 au niveau de l'orifice 12a. Le roulement 22 est monté de manière solidaire dans l'orifice 12a de la cloison intermédiaire 12 et sur la portion interne 21 du manchon 20. L'organe ressort 18 est sous la forme de la rondelle ressort 27 qui est disposée autour de la portion interne 21 et vient en appui sur le roulement 22 et sur la face intérieure 3b de la porte 3. L'organe de réglage 17 est recouvert par le capot 31 qui est fixé par les organes de fixation 32 sous forme de vis à la porte 3. L'extrémité interne 28 du manchon 20 qui est à l'opposé de l'extrémité externe saillante 23 est dans l'espace 29 ainsi que le support 41 de la roue de séparation 36 (non visible) qui est fixé à l'extrémité interne 28. L'extrémité interne 28 du manchon 20 présente une forme évasée conique. L'extrémité interne 28 du manchon 20 est en regard de la surface supérieure 8 du disque 7.

La figure 4 illustre l'emplacement du jeu J qui correspond à l'écartement entre la deuxième surface 9 du disque 7 et la partie fixe 2 du boîtier 1 dans la position de fermeture POFF de la porte 3.

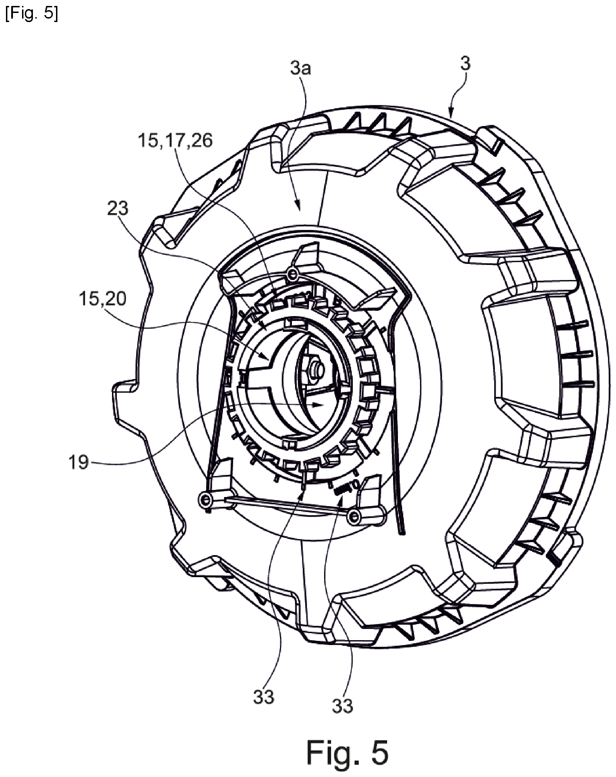

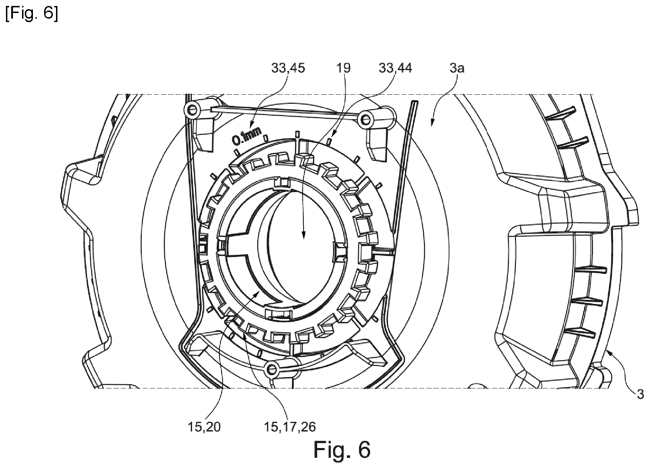

Les figures 5 et 6 illustrent la porte 3 avec l'organe de réglage 17 du dispositif de réglage 15 sans le capot 31 qui est démonté et avec l'indicateur visuel 33 qui est visible de l'extérieur de la porte 3 étant donné que le capot 31 n'est pas monté. L'organe de réglage 17 sous la forme de l'écrou de réglage 26 est vissé sur l'extrémité externe saillante 23 saillante de la face extérieure 3a de la porte 3. L'indicateur visuel 33 se présente sous la forme de la graduation avec un ensemble de traits 44 et de la valeur d'une mesure 45, indiquant le pas du réglage du jeu J entre deux traits 44 adjacents. Cette valeur de la mesure 45 vaut 0.1 millimètre. Les traits 44 sont répartis à distance régulière circulairement au moins en partie autour du passage central 19 et de l'écrou de réglage 26 sur la face extérieure 3a de la porte 3.

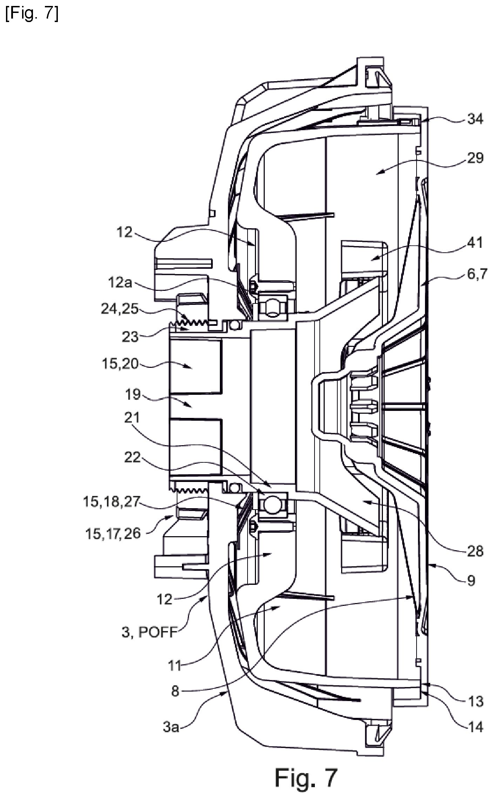

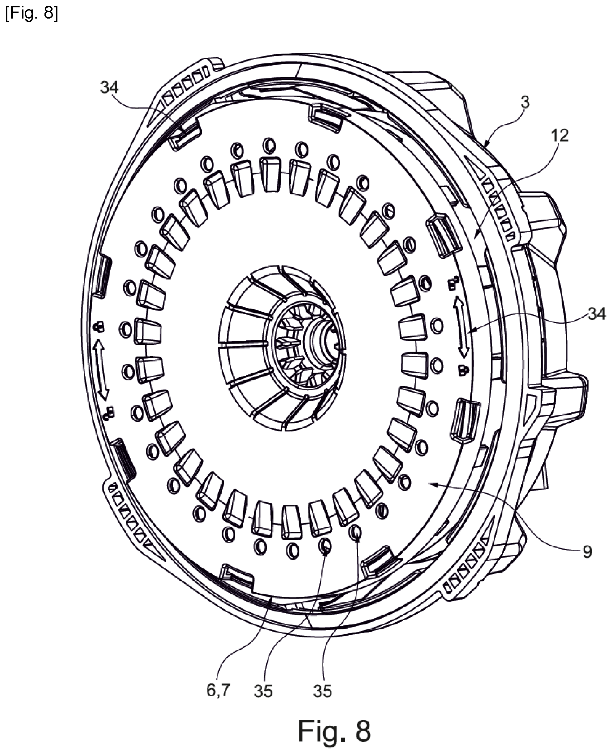

Les figures 7 et 8 illustrent la porte 3 avec le sous-ensemble cloison intermédiaire 12-disque 7 déjà décrit précédemment sans le capot 31. Le disque 7 et la cloison intermédiaire 12 sont solidarisés l'un à l'autre par les organes d'assemblage 34. Le disque 7 comprend des perforations 35.

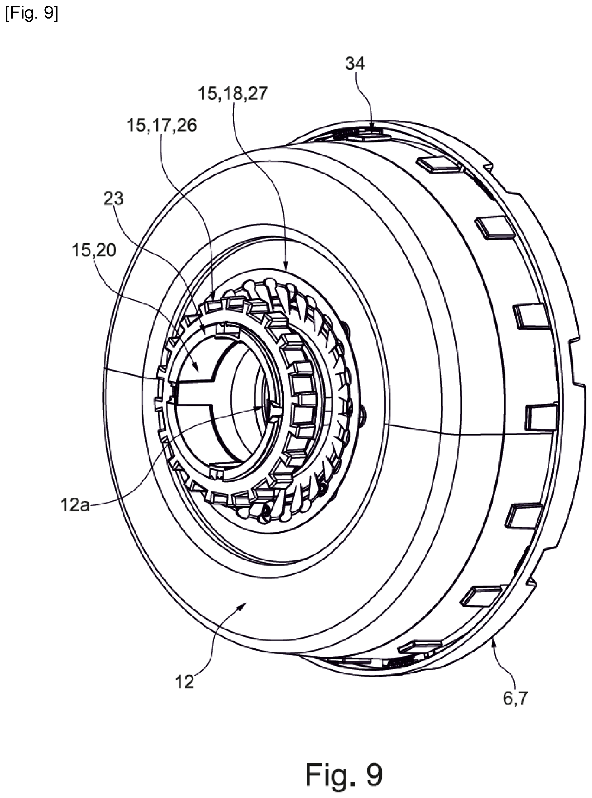

La figure 9 illustre le dispositif de réglage 17 et le sous-ensemble cloison intermédiaire 12-disque 7 sans la porte 3. Le disque 7 et la cloison intermédiaire 12 sont solidarisés l'un à l'autre par les organes d'assemblage 34. On observe que l'orifice 12a de la cloison intermédiaire 12 est traversé par le manchon 20 avec l'extrémité externe saillante 23 saillante de la cloison intermédiaire 12. L'organe de réglage 17 sous la forme de l'écrou de réglage 26 et l'organe ressort 18 sous la forme de la rondelle ressort 27 sont à l'extérieur de la cloison intermédiaire 12.

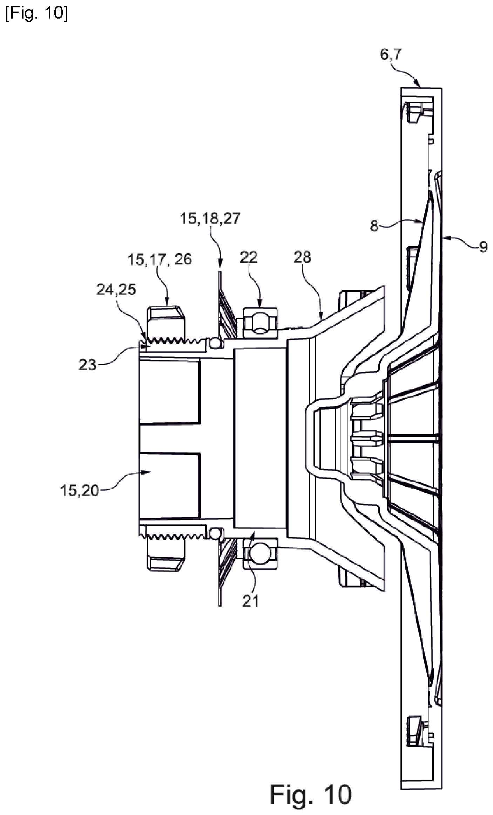

La figure 10 illustre le dispositif de réglage 15 et le disque 7. Le manchon 20 et le disque 7 sont alignés axialement. Le manchon 20 est de forme globalement cylindrique. Le manchon 20 comprend la portion interne 21 entourée par l'extrémité externe saillante 23 et l'extrémité interne 28. L'extrémité interne 28 du manchon 20 présente une forme évasée conique. L'extrémité interne 28 du manchon 20 est en regard de la surface supérieure 8 du disque 7. L'extrémité externe saillante 23 comprend sur sa paroi externe 24 le filetage 25 sur lequel est vissé l'écrou de réglage 26. Le roulement 22 est monté de manière solidaire autour de la portion interne 21 du manchon 20. Le roulement 22 supporte l'organe ressort 18 sous la forme de la rondelle ressort 27 lequel est du côté de l'extrémité externe saillante 23.

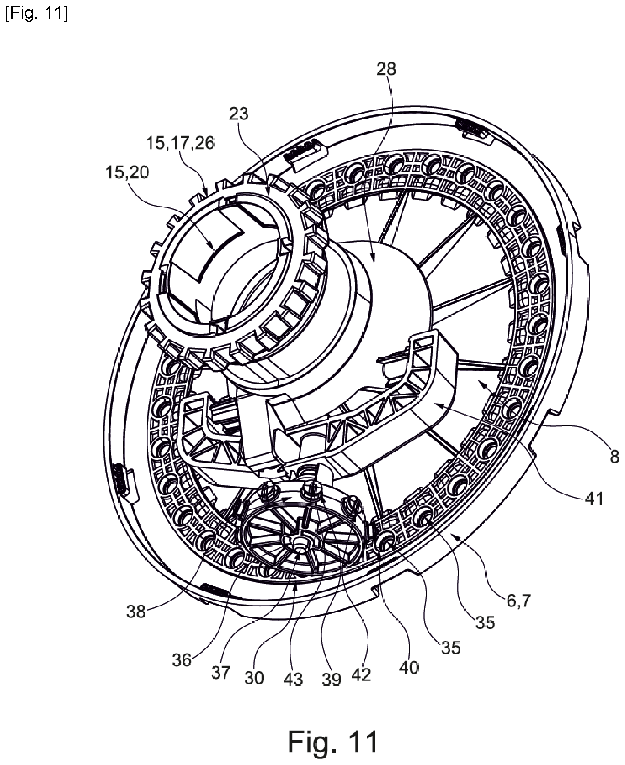

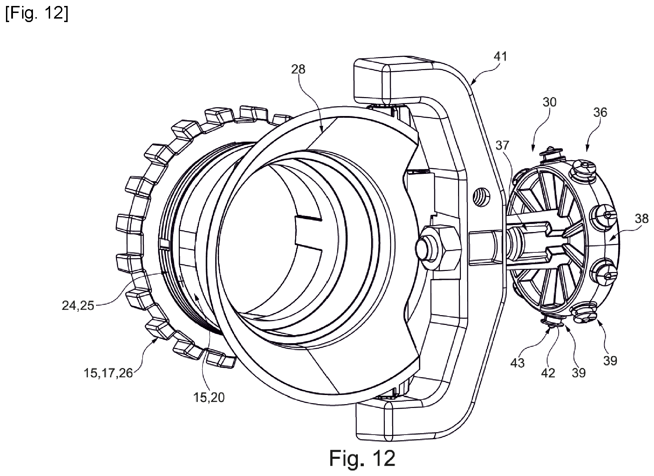

Les figures 11 et 12 illustrent le dispositif de réglage 17 décrit précédemment, le disque 7 et le dispositif d'éjection 30. Le dispositif d'éjection 30 comprend la roue de séparation 36 rotative autour de l'axe de rotation 37. La roue de séparation 36 comporte une pluralité de saillies radiales 39 saillantes de la surface périphérique 38, chacune des saillies radiales 39 étant configurées pour s'insérer dans une des perforations 35 dans une position d'insertion. Les saillies radiales 9 sont configurées pour s'insérer par l'entrée 40 de l'une des perforations 35 de manière étanche à l'intérieur de celle-ci 3 par conjugaison de forme et/ou au moyen d'un élément d'étanchéité dans la position d'insertion de sorte à réaliser l'étanchéité à l'intérieur de la perforation 35. La roue de séparation 36 est montée en rotation autour de l'axe de rotation 37 sur un support 41 qui est fixé à l'extrémité interne 28. Chaque saillie radiale 39 présente un sommet 42 duquel le pion de centrage 43 est saillant. Ce pion de centrage 43 débouche vers la sortie (non visible) de la perforation 35 dans la position d'insertion.

L'invention concerne également un semoir (non illustré) comprenant un ensemble de distribution caractérisé en ce que l'ensemble de distribution est conforme à l'invention.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble de distribution pour un semoir comprenant au moins :
- un boîtier (1) étanche comprenant au moins une partie fixe (2) et une porte (3) mobile entre une position d'ouverture et une position de fermeture (POFF),
- un axe d'entrainement (4) d'un moteur (5) débouchant sur la partie fixe (2),
- un organe de distribution (6) d'une pluralité d'éléments granulaires agencé pour distribuer de façon discrète et singulière une pluralité d'éléments granulaires sous la forme d'un disque (7) perforé comportant une première surface (8) orientée en regard de l'intérieur de la porte (3) dans la position de fermeture (POFF) et une deuxième surface (9) en regard de la partie fixe (2) dans la position de fermeture (POFF), au moins dans la position de fermeture (POFF) le disque (7) étant monté autour de l'axe d'entrainement (4) du moteur (5) pour être entraîné en rotation et étant disposé à l'intérieur du boîtier (1) pour séparer l'intérieur du boîtier (1) en une première chambre (10) et une deuxième chambre (11), lesquelles sont distinctes, la première chambre (10) étant configurée pour recevoir tout ou partie de la pluralité d'éléments granulaires et la deuxième chambre (11) étant fermée par la porte (3),
- la deuxième chambre (11) comporte une cloison intermédiaire (12) en forme de cloche comportant une surface d'appui circulaire (13) venant en appui sur un bord périphérique (14) de la première surface (8) du disque (7),
- un dispositif de réglage (15) d'un jeu (J) correspondant à l'écartement entre la deuxième surface (9) du disque (7) et la partie fixe (2) du boîtier (1) dans la position de fermeture (POFF),
ensemble de distribution **caractérisé en ce que** :
- le dispositif de réglage (15) du jeu (J) est configuré pour permettre le déplacement en translation, selon une direction de translation axiale parallèle à l'axe d'entraînement (4), du sous-ensemble cloison intermédiaire (12)-disque (7) relativement à la partie fixe (2) du boîtier (1) et pour contraindre la position du sous-ensemble cloison intermédiaire (12)-disque (7) par rapport à la partie fixe (2),
- le dispositif de réglage (15) comprend un organe de réglage (17) du jeu (J) saillant de la face extérieure (3a) de la porte (3), et configuré pour régler le jeu (J).

2. Ensemble de distribution selon la revendication 1, **caractérisé en ce que** le dispositif de réglage (15) comprend un organe ressort (18) situé à l'intérieur de la deuxième chambre (11) entre la face intérieure (3b) de la porte (3) et la surface externe supérieure (16) de la cloison intermédiaire (12).

3. Ensemble de distribution selon la revendication 2, **caractérisé en ce que** la porte (3) comprend un passage central (19) et **en ce que** le dispositif de réglage (15) comprend un manchon (20) traversant le passage central (19) monté coulissant selon la direction de translation axiale dans le passage central (19) et comportant une portion interne (21) située dans la deuxième chambre (11) comprenant un roulement (22) autour duquel la cloison intermédiaire (12) est montée solidaire et **en ce que** la face intérieure (3b) de la porte (3) vient en appui contre l'organe ressort (18) et l'organe ressort (18) vient en appui contre le roulement (22) de sorte à exercer une force d'appui pour contraindre le sous-ensemble cloison intermédiaire (12)-disque (7).

4. Ensemble de distribution selon la revendication 3, **caractérisé en ce que** le manchon (20) comprend une extrémité externe saillante (23) de la face extérieure (3a) de la porte (3), l'extrémité externe saillante (23) comprenant une paroi externe (24) avec un filetage (25), et l'organe de réglage (17) comprend un écrou de réglage (26) associé au filetage (25).

5. Ensemble de distribution selon l'une quelconque des revendications 3 à 4, **caractérisé en ce que** l'organe ressort (18) comprend au moins une rondelle ressort (27) disposée autour de la portion interne (21) du manchon (20) et en appui sur le roulement (22).

6. Ensemble de distribution selon l'une quelconque des revendications 3 à 5, **caractérisé en ce que** le manchon (20) comprend une extrémité interne (28) située dans l'espace (29) entre la cloison intermédiaire (12) et le disque (7) et **en ce que** l'ensemble de distribution comprend un dispositif d'éjection (30) fixé sur, ou à proximité de l'extrémité interne (28).

7. Ensemble de distribution selon l'une quelconque des revendications 1 à 6, **caractérisé en ce que** l'ensemble de distribution comprend un capot (31) recouvrant l'organe de réglage (17) et **en ce que** le capot (31) est fixé par au moins un organe de fixation (32) à la porte (3).

8. Ensemble de distribution selon l'une quelconque des revendications 1 à 7, **caractérisé en ce que** la face extérieure (3a) de la porte (3) comprend un indicateur visuel (33) représentatif du réglage du jeu (J) disposé autour de l'organe de réglage (17).

9. Ensemble de distribution selon l'une quelconque des revendications 1 à 8, **caractérisé en ce que** la cloison intermédiaire (12) et le disque (7) sont solidarisés par des organes d'assemblage (34).

10. Semoir comprenant un ensemble de distribution **caractérisé en ce que** l'ensemble de distribution est conforme à l'une quelconque des revendications 1 à 9.
